# EUROPEAN PATENT SPECIFICATION

(11) **EP 2 832 978 B1**
(45) Date of publication and mention of the grant of the patent: **12.12.2018**
(21) Application number: 13769400.6
(22) Date of filing: 19.03.2013
(51) Int. Cl.: F02D 41/06, F02D 17/00, F02D 17/02, F02D 29/02, F02N 15/00, F02P 19/02

(54) **DIESEL ENGINE STARTING DEVICE AND STARTING METHOD**
DIESELMOTORSTARTVORRICHTUNG UND STARTVERFAHREN
DISPOSITIF DE DÉMARRAGE ET PROCÉDÉ DE DÉMARRAGE DE MOTEUR DIESEL

(30) Priority: 27.03.2012 JP 2012071440
(43) Date of publication of application: 04.02.2015
(73) Proprietor: Isuzu Motors, Ltd., Tokyo 140-8722 (JP)
(72) Inventor: NAGAOKA Daiji, Fujisawa-shi Kanagawa 252-0881 (JP); GABE Masashi, Tokyo 140-8722 (JP)
(74) Representative: Schaumburg und Partner Patentanwälte mbB
(86) International application number: PCT/JP2013/057801
(87) International publication number: WO 2013/146463

(56) References cited:
- EP-A1- 1 903 199
- EP-A2- 1 445 461
- EP-A2- 2 034 163
- JP-A- 2001 342 934
- JP-A- 2004 176 569
- JP-A- 2007 309 276
- JP-A- 2009 062 960

## Description

### TECHNICAL FIELD

The present invention relates to a diesel engine starting device and a diesel engine starting method, and in particular to a starting device and a starting method for a diesel engine that has a no idling (idle reduction) function to stop fuel injection when a predetermined automatic stop condition is met.

### BACKGROUND ART

Among general gasoline engines, there is known an engine that has a no idling (idle reduction) function to stop fuel injection when a vehicle stops moving (e.g., when the vehicle waits for a traffic light to change) in order to improve a fuel efficiency (fuel consumption rate). See, for example, Patent Literature 1 (Japanese Patent Application Laid-Open Publication No. 2006-83788).

In such engine having the no idling function, the pressure in the engine cylinders is made high during the no idling operation (during deactivation of the engine) so that the engine can instantaneously start running upon ignition by spark plugs when the engine should be restarted. This reduces the time lag in the restarting operation.

### LISTING OF REFERENCE(S)

PATENT LITERATURE 1: Japanese Patent Application Laid-Open Publication No. 2006-83788

A starting device for a diesel engine according to the preamble of claim 1 is known from JP 2009 062960 A.

### SUMMARY OF THE INVENTION

### PROBLEM(S) TO BE SOLVED BY THE INVENTION

When a diesel engine should be restarted after the no idling operation (after deactivation of the engine), it is not possible for the diesel engine to rely upon an ignition control with the spark plugs because the combustion of the diesel engine relies upon self-ignition whereas the gasoline engine can rely on the above-described ignition control with the spark plugs. Thus, the diesel engine requires a different ignition control than the gasoline engine to restart the diesel engine.

In order to ignite the fuel in the diesel engine, a certain temperature is needed at the compression stroke end and a certain concentration is needed for the fuel-air mixture. However, the conventional diesel engines cannot have a sufficient pressure in the engine cylinders until the piston speed reaches a certain value (e.g., approximately 200 rpm). If the cylinder pressure is insufficient, the fuel is not sufficiently mixed with the air. As a result, even if glow plugs are used, the diesel engine may not able to stably ignite the fuel in a short time when the engine is restarted after the no idling operation.

The present invention is developed in view of these facts, and an object of the present invention is to provide a diesel engine starting device and a diesel engine starting method that can achieve stable combustion in a short time when the diesel engine is restarted after the no idling operation (after the idling is forcibly stopped).

### SOLUTION TO OVERCOME THE PROBLEM(S)

In order to achieve the above-mentioned object according to one aspect of the present invention, there is provided a starting device according to claim 1 for a diesel engine that has a no idling function to stop fuel injection when a predetermined automatic stop (deactivation) condition is met. The diesel engine starting device includes a fuel injection unit configured to directly inject fuel in respective cylinders of the diesel engine. The diesel engine starting device also includes glow plugs configured to generate heat upon receiving electricity to increase the temperature of the cylinders of the diesel engine. The diesel engine starting device also includes a starter motor configured to be driven for causing a crankshaft to rotate when the diesel engine starts running. The diesel engine starting device also includes a control unit configured to control the fuel injection of the fuel injection unit, the electricity feeding to the glow plugs, and the activation of the starter motor. The control unit stops the piston of a predetermined cylinder at the bottom dead center of the compression stroke during the no idling operation, and starts the electricity feeding to the glow plugs. When the predetermined automatic stop condition is no longer met and the diesel engine should be restarted, the control unit then drives the starter motor to cause the piston in the predetermined cylinder to move upward from the bottom dead center of the compression stroke, and causes the fuel injection unit to finely inject the fuel in the predetermined cylinder in multiple injection stages. The control unit also causes the fuel injection unit to inject a small amount of fuel for ignition immediately before the piston of the predetermined cylinder reaches the top dead center.

According to another aspect of the present invention, there is provided a starting method according to claim 3 for a diesel engine that has a no idling function to stop fuel injection when a predetermined automatic stop condition is met. The diesel engine starting method includes stopping a piston of a predetermined cylinder at the bottom dead center of the compression stroke during the no idling operation, and starting the electricity feeding to the glow plugs to increase the temperature of the respective cylinders of the diesel engine. When the predetermined automatic stop condition is no longer met and the diesel engine should be restarted, the diesel engine starting method drives a starter motor to rotate a crankshaft thereby causing the piston in the predetermined cylinder to move upward from the bottom dead center of the compression stroke, and causes the fuel injection unit to finely inject the fuel in the predetermined cylinder in multiple injection stages. The diesel engine starting method also includes causing the fuel injection unit to inject a small amount of fuel for ignition in the predetermined cylinder immediately before the piston of the predetermined cylinder reaches the top dead center.

### ADVANTAGE(S) OF THE INVENTION

The starting device and method for the diesel engine according to the present invention can achieve stable combustion in a short time when the engine is restarted after the no idling operation.

### BRIEF DESCRIPTION OF THE DRAWINGS

Fig. 1 schematically shows a general configuration of a starting device for a diesel engine according to one embodiment of the present invention.
Fig. 2 is a functional block diagram of an ECU according to the embodiment of the present invention.
Fig. 3 shows a flowchart of the control performed by the ECU according to the embodiment of the present invention.

### MODE FOR CARRYING OUT THE INVENTION

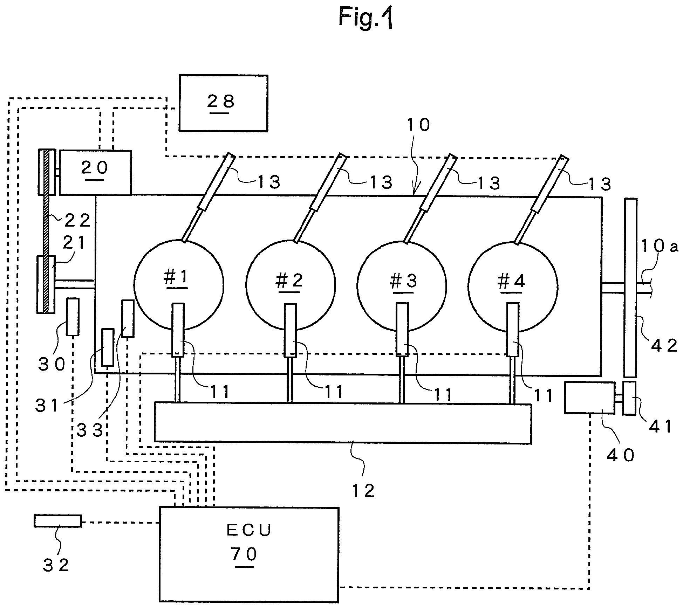

Now, a diesel engine starting device and a diesel engine starting method according to one embodiment of the present invention will be described with reference to Figs. 1 to 3. The same components are assigned the same reference numerals, given the same names and imparted the same functions. Thus, the detailed description of the same components will not be repeated in the following description.

Firstly, a general configuration of a starting device for a diesel engine according to this embodiment will be described.

As shown in Fig. 1, the diesel engine (simply referred to as "engine" hereinafter) 10 has a plurality of cylinders. In this embodiment, the engine has four cylinders. The cylinders #1 to #4 are provided with injectors 11 to directly inject fuel into the associated cylinders, respectively.

Each of the injectors 11 is a known piezo type injector that can change an opening area of the injection hole upon application of a voltage to a piezo element (not shown). The injectors 11 are connected to a common rail 12 via fuel supply lines, respectively. A pressurized fuel, which is pumped by a high-pressure feed pump (not shown) from a fuel tank (not shown), is fed to the common rail 12. The fuel injection from the injectors 11 is controlled by an instruction signal generated (issued) from an electronic control unit (will be described, and referred to as "ECU" hereinafter) 70.

Each of the cylinders #1 to #4 of the engine 10 is provided with a glow plug 13 such that a front end (free end) of the glow plug 13 is exposed in the associated cylinder. The glow plugs 13 elevate the surface temperature (e.g., up to 700 to 800 degrees C, or more) upon electricity feeding to heaters located in the glow plugs 13 when the engine 10 is started. Thus, the glow plugs 13 ignite the fuel adhered on the surfaces thereof. The electricity feeding/no electricity feeding to the heaters of the glow plugs 13 is controlled by instruction signals generated from the ECU 70.

An alternator or alternating current generator (referred to as "ACG" hereinafter) 20 is mounted on a front portion of the engine 10. A rotating force of a crank pulley 21 coupled to a crankshaft 10a is transmitted to the ACG 20 via a belt 22. The ACG 20 has a rotor coil (not shown) and a stator coil (not shown). Generation or no generation of power by the alternator is selected as the excitation current is fed or not fed to the rotor coil in response to an instruction signal introduced from the ECU 70. The electric power generated by the ACG 20 is used to drive an accessory (not shown) of the engine 10, and a surplus power is accumulated in a battery 28.

A starter motor 40 to start the engine 10 is mounted on a rear portion of the engine 10. A pinion gear 41 is provided on an output shaft of the starter motor 40 such that the pinion gear 41 can move in an axial direction. A ring gear 42 secured on a flywheel (not shown) is provided on the crankshaft 10a of the engine 10. When the starter motor 40 is used to start the engine 10, the pinion gear 41 moves on the output shaft of the starter motor 40 and meshes with the ring gear 42. Then, the driving force of the starter motor 40 causes the crankshaft 10a to rotate for cranking.

A crank angle sensor 30 is configured to detect a rotation angle of the crankshaft 10a. The detection value of the sensor 30 is introduced to the ECU 70. The sensor 30 is electrically connected to the ECU 70. A cam sensor 31 is configured to detect a rotation angle of a cam shaft (not shown). The detection value of the cam sensor 31 is introduced to the ECU 70. The cam sensor 31 is electrically connected to the ECU 70.

A vehicle speed sensor 32 is configured to detect a vehicle speed. The detection value of the sensor 32 is introduced to the ECU 70. The sensor 32 is electrically connected to the ECU 70. A cooling water temperature sensor 33 is configured to detect temperature of the engine cooling water that flows in a water jacket (not shown) of the engine 10. The detection value of the sensor 33 is introduced to the ECU 70. The sensor 33 is electrically connected to the ECU 70.

The ECU 70 is configured to perform various control on the engine 10, and includes a known CPU, ROM, RAM, input ports, output ports and the like. In order for the ECU 70 to perform the various control, the output signals of the respective sensors are introduced to the ECU 70.

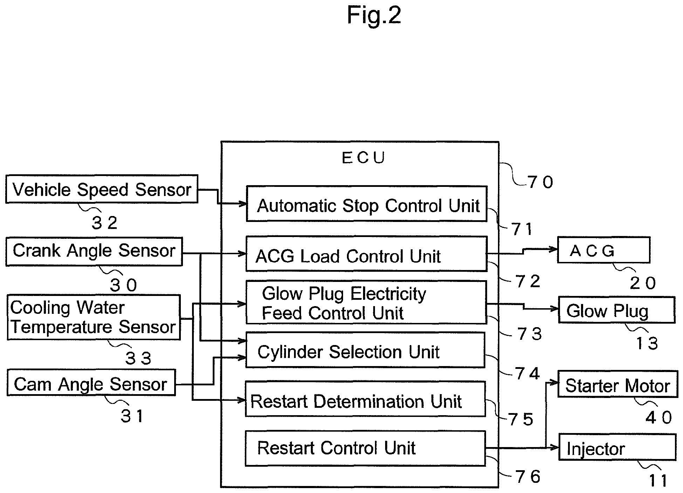

As shown in Fig. 2, the ECU 70 also includes, among other components, an automatic stop control unit 71, an ACG load control unit 72, a glow plug electricity feed control unit 73, a cylinder selection unit 74, a restart determination unit 75, and a restart control unit 76. Although these units are described as components of the ECU 70, which is single hardware in this embodiment, any of these components may be included in separate hardware.

The automatic stop control unit 71 carries out the no idling operation to automatically stop the engine 10 when a predetermined automatic stop condition is met (e.g., when the vehicle stops moving to wait for a traffic light to change). For example, the predetermined automatic stop condition is met when the vehicle speed detected by the vehicle speed sensor 32 is 0 (zero) and an acceleration pedal is not depressed (or a brake pedal is depressed). When such automatic stop condition is met, the automatic stop control unit 71 generates (issues) an instruction signal (referred to as "engine stop signal" hereinafter) to stop the fuel injection from the injectors 11. When the predetermined automatic stop condition is no longer met (e.g., when the acceleration pedal is depressed during the no idling operation), the automatic stop control unit 71 generates an instruction signal (referred to as "engine restart signal" hereinafter) to restart the engine 10.

The ACG load control unit 72 controls the operation of the ACG 20 such that a piston of a prescribed cylinder (the cylinder #1 in this embodiment) stops at the bottom dead center of the compression stroke, which is the best position for restarting the engine, when the engine stop signal is issued to perform the no idling operation and the engine 10 rotates due to an inertia energy. Specifically, the ECU 70 stores a map (not shown) that indicates relationship between the crank angles and the rotating force of the ACG 20 needed to stop the piston at the bottom dead center of the compression stroke from the respective crank angles. The map is prepared beforehand based on experiments and the like. The ACG load control unit 72 reads from the map the rotating force which corresponds to the detection value of the crank angle sensor 30 when the engine stop signal is issued. The ACG load control unit 72 then causes the ACG 20 to generate the electric power such that the rotating force, which is read from the map, is applied to the crankshaft 10a. As a result, it is possible to surely stop the piston of the prescribed cylinder (cylinder #1) at the bottom dead center of the compression stroke when the no idling operation is performed.

The glow plug electricity feed control unit 73 controls the electricity feeding to the glow plugs 13. Specifically, while the automatic stop control unit 71 is performing the no idling operation, the glow plug electricity feed control unit 73 feeds the electricity to the glow plugs 13 (i.e., turns on the electricity feeding) if the temperature in the cylinders, which is presumed from the detection values of the cooling water temperature sensor 33 and/or an intake air temperature sensor (not shown), decreases to a predetermined lower limit temperature (e.g., 400 degrees C) that deteriorates the fuel ignition at the restart of the engine 10. When the time that elapses from stoppage of the idling, which is counted by a timer device (not shown), exceeds a predetermined time (e.g., three minutes), the glow plug electricity feed control unit 73 does not feed the electricity to the glow plugs 13 (i.e., turns off the electricity feeding) in order to avoid wasteful power consumption of the batter 28.

When the no idling operation is performed and the crankshaft 10a stops rotating, the cylinder selection unit 74 selects one cylinder from the four cylinders #1 to #4, which has a piston resting at the bottom dead center of the compression stroke, based on the detection values of the crank angle sensor 30 and/or the cam angle sensor 31. This cylinder is selected as the cylinder to which the fuel injection is firstly carried out when the engine is restarted. In this embodiment, the cylinder #1 is usually selected as the starting cylinder because of the piston stop control of the ACG load control unit 72. It should be noted, however, that if a piston of another cylinder (for example, the cylinder #3) stops at the bottom dead center of the compression stroke under the influences of external forces, then this cylinder may be selected as the starting cylinder.

When the engine restart signal is issued from the automatic stop control unit 71, the restart determination unit 75 determines whether or not the restart control unit 76 can restart the engine 10 (will be described later in detail). For example, when a long time elapses since the no idling operation is carried out, the engine 10 enters a cool down state, and it is difficult for the restart control unit 76 to restart the engine. Thus, the restart determination unit 75 determines that the restart control unit 76 cannot restart the engine, if the time from stoppage of the idling, which is counted by the timer device (not shown), exceeds the predetermined time (e.g., three minutes), or if the detection value of the cooling water temperature sensor 33 becomes lower than the predetermined temperature (e.g., 80 degrees C). When it is determined that the engine restart by the restart control unit 76 is impossible, the engine 10 may be restarted by means of normal startup control.

When the restart determination unit 75 determines that the restart is possible, the restart control unit 76 causes the engine 10 to restart in the following manner. Firstly, the restart control unit 76 actuates the starter motor 40 to start the cranking of the engine 10. As the piston of the cylinder (the cylinder #1 in this embodiment) selected as the starting cylinder by the cylinder selection unit 74 starts ascending from the bottom dead center of the compression stroke, the restart control unit causes the injector 11 to finely inject the fuel in multiple stages to prepare a lean fuel-air mixture (fuel-air mixture for main combustion). As the cranking further proceeds and the piston reaches a position immediately before the top dead center, the restart control unit causes the injector 11 to inject a small amount of fuel for ignition. As a result, ignition of the fuel-air mixture takes place primarily from the fuel-rich area into which the fuel is just injected. Then, the fuel-air mixture for main combustion is instantaneously ignited in the cylinder.

Similar fuel injection control is performed to the other cylinders #2 to #4. For each of the cylinders #2 to #4, the restart control unit 76 causes the injector to finely inject the fuel in the cylinder in multiple stages as the piston moves upward from the bottom dead center of the compression stroke. The restart control unit also causes the injector to inject a small amount of fuel for ignition, immediately before the piston reaches the top dead center. This fuel injection control is performed in the order of from the cylinder #3, #4 and #2 in this embodiment. The restart control by the restart control unit 76 continues until the engine revolution speed detected by the crank angle sensor 30 reaches a predetermined revolution speed (e.g., 200 rpm). When the engine revolution speed exceeds the predetermined revolution speed, the fuel injection control on the injector 11 is switched to the normal multi-stage injection control which is performed based on the running condition of the engine 10.

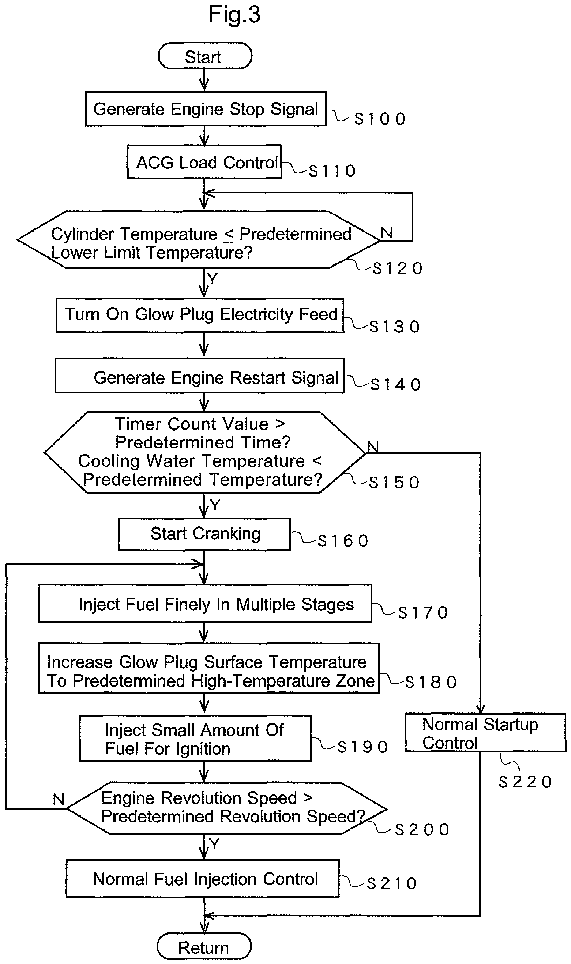

Now, the control flow performed by the ECU 70 of the diesel engine starting device according to this embodiment will be described with reference to Fig. 3.

At Step S100, the automatic stop control unit 71 issues the engine stop signal when the predetermined automatic stop condition is met. Thus, the fuel injection from the injector 11 is stopped. At Step S110, the ACG load control unit 72 causes the ACG 20 to perform the power generation such that the piston of the desired or prescribed cylinder (cylinder #1 in this embodiment) stops at the bottom dead center of the compression stroke, which is the most suitable for restarting of the engine.

At Step S120, it is determined whether the temperature in the cylinder, which is presumed from the detection values of the cooling water temperature sensor 33 and/or the intake air temperature sensor (not shown), drops to the predetermined lower limit temperature (e.g., 400 degrees C) that deteriorates the fuel ignition at the restart of the engine 10. When it is determined that the presumed value of the cylinder temperature drops to the predetermined lower limit temperature, the glow plug electricity feed control unit 73 feeds the electricity to the glow plug 13 at Step S130.

At Step S140, the engine restart signal is issued in response to a fact that the predetermined automatic stop condition is no longer met (e.g., the acceleration pedal is depressed).

At Step S150, the restart determination unit 75 determines whether or not the restart control unit 76 can restart the engine 10. For example, when the time from the stoppage of the idling, which is counted by the timer device, does not exceed the predetermined time (e.g., three minutes), or when the detection value of the cooling water temperature sensor 33 is not lower than the predetermined temperature (e.g., 80 degrees C), then it is determined that the engine restart by means of the restart control unit 76 is possible, and the control proceeds to Step S160.

On the other hand, when the time from the stoppage of the idling, which is counted by the timer device, exceeds the predetermined time, or when the detection value of the cooling water temperature sensor 33 is lower than the predetermined temperature, then it is determined that the engine restart by means of the restart control unit 76 is not possible. When it is determined that the engine restart by means of the restart control unit 76 is not possible, the engine 10 may be restarted by means of normal startup control (see Step S220).

At Step S160, the restart control unit 76 drives the starter motor 40 to cause the engine 10 to start cranking. As the piston of the cylinder selected (cylinder #1 in this embodiment) as the starting cylinder by the cylinder selection unit 74 ascends from the bottom dead center of the compression stroke, the restart control unit causes the injector 11 to finely inject the fuel in the cylinder in multiple stages at Step S170 to create the lean fuel-air mixture (fuel-air mixture for main combustion) in the cylinder.

At Step S180, the surface temperature of the glow plug 13, to which the electricity is supplied at Step S120, rises to a predetermined high temperature region (e.g., 700 to 800 degrees C). At Step S190, the restart control unit causes the injector 11 to inject a small amount of fuel in the cylinder for ignition, immediately before the piston reaches the top dead center. As a result, ignition of the fuel-air mixture takes place primarily from the fuel-rich area into which the fuel is just injected. Then, the fuel-air mixture for main combustion is instantaneously ignited in the cylinder. The resulting explosion power causes the crankshaft 10a to rotate.

At Step S200, it is determined whether or not the engine revolution speed detected by the crank angle sensor 30 reaches the predetermined revolution speed (e.g., 200 rpm). When it is determined that the engine revolution speed reaches the predetermined revolution speed, the restart control is switched to the normal fuel injection control at Step S210. The normal fuel injection control is performed based on the running condition of the engine 10. Then, the program proceeds to "RETURN."

On the other hand, when the engine revolution speed does not reach the predetermined revolution speed, the program returns to Step S170. In other words, the fuel injection control of Steps S170 to S190 is repeated until the engine revolution speed rises to a certain value and becomes stable.

The operations and advantages of the diesel engine starting device and method according to this embodiment will be described below.

When the predetermined automatic stop condition for the no idling operation is met and the engine stop signal is issued, the operation of the ACG 20 is controlled such that the piston of a prescribed cylinder (cylinder #1 in this embodiment) stops at the bottom dead center of the compression stroke, which is the most suitable for restarting the engine. In addition, when the temperature in the cylinder decreases to the predetermined lower limit temperature (e.g., 400 degrees C) that degrades the ignition of the fuel at the restart of the engine 10, the electricity feeding to the glow plug 13 is forced to start (the electricity feeding is turned on).

Subsequently, when the predetermined automatic stop condition is no longer satisfied and the engine restart signal is issued, the starter motor 40 is activated to cause the engine 10 to start cranking. When the piston of the predetermined cylinder (cylinder #1) starts ascending from the bottom dead center of the compression stroke, the injector 11 finely injects the fuel in the cylinder in multiple stages such that the lean fuel-air mixture, which is the fuel-air mixture for main combustion, is created in the cylinder.

When the surface temperature of the glow plug 13 rises to the predetermined high temperature zone (e.g., 700 to 800 degrees C), and the piston reaches a position immediately before the top dead center, the injector 11 injects a small amount of fuel in the cylinder for ignition. Thus, the fuel ignition occurs primarily in the fuel-rich areas which are made by the fuel just injected. Then, the fuel-air mixture for main combustion is instantaneously ignited in the cylinder.

According to the diesel engine starting device and method of this embodiment, therefore, it is possible to realize a stable combustion in a short time by means of the glow plugs 13 when the engine is restarted after stoppage of the idling of the engine (after the no idling operation).

The premixing of the fuel and the air can have a sufficient time. Thus, the fuel and the air are mixed sufficiently in the fuel-air mixture. Accordingly, only a very small amount of fuel needs to be injected at the time of the engine restarting because the fuel that can form an ignition core (kernel) is enough. Unlike the normal operation for restarting the engine, therefore, it is not necessary to inject an excessive amount of fuel. This effectively reduces the deterioration of the exhaust gas due to HC and the like at the time of the engine restarting, and effectively suppresses the decrease in the fuel efficiency.

Because it is possible to surely ignite the fuel injected during the half rotation of the crankshaft, the engine is restarted in a short time and smoothly (comfortably) after the no idling operation.

When the starting device and the starting method of the above-described embodiment are applied to an existing engine, the capacity of the battery 28 may be increased, and the load control on the ACG 20 may be added to the ECU. Thus, only a small cost increase and slight design modifications may be needed to change the existing engine to an engine equipped with the starting device of this embodiment, and this change can be made easily.

For example, the engine 10 is not limited to the four-cylinder engine. The engine 10 may be a single cylinder engine or a six-cylinder engine. Thus, the present invention can be applied to a wide variety of engines other than the four-cylinder engine.

Furthermore, the application of the present invention is not limited to the diesel engine. For example, the present invention may be applied to various types of compression-ignition engines which directly inject the fuel into the cylinders and trigger self-ignition upon compression caused by upward movements of the pistons.

### EXPLANATIONS OF REFERENCE NUMERALS

- 10: engine
- 11: injector (fuel injection unit)
- 12: common rail (fuel injection unit)
- 13: glow plug
- 20: alternator
- 30: crank angle sensor
- 31: cam angle sensor
- 32: speed sensor
- 33: cooling water temperature sensor
- 40: starter motor
- 70: ECU (control unit)
- 71: automatic stop control unit
- 72: ACG load control unit
- 73: glow plug electricity feed control unit
- 74: cylinder selection unit
- 75: restart determination unit
- 76: restart control unit

## Claims

1. A starting device for a diesel engine (10) that has an automatic stop control to stop fuel injection when a predetermined automatic stop condition is met, the starting device comprising:
a plurality of fuel injection units (11) configured to directly inject fuel in a plurality of cylinders (#1, #2, #3, #4) of the diesel engine (10), respectively;
a plurality of glow plugs (13) configured to generate heat upon receiving electricity to increase temperature of the cylinders (#1, #2, #3, #4) of the diesel engine (10), respectively;
a starter motor (40) configured to be driven to cause a crankshaft (10a) to rotate when the diesel engine (10) starts running; and
a control unit (70) configured to control the fuel injection of the fuel injection units (11), electricity feeding to the glow plugs (13), and activation of the starter motor (40),
**characterized in that** the control unit (70) is configured to stop a piston of a predetermined cylinder (#1) among the plurality of cylinders (#1, #2, #3, #4) at a bottom dead center of a compression stroke and start the electricity feeding to the glow plug (13) when the automatic stop control is performed,
and thereafter, when the predetermined automatic stop condition is no longer met and the diesel engine (10) is restarted, the control unit (70) is also configured to drive the starter motor (40) to cause the piston of the predetermined cylinder (#1) to move upward from the bottom dead center of the compression stroke, cause the fuel injection unit (11) to inject the fuel in the predetermined cylinder in multiple injection stages after actuation of the starter motor (40) is started so as to create a lean fuel-air mixture for main combustion in the predetermined cylinder (#1) and cause the fuel injection unit (11) to inject fuel for ignition immediately before the piston of the predetermined cylinder (#1) reaches a top dead center so as to ignite the lean fuel-air mixture for main combustion.

2. The starting device of claim 1, further comprising an alternator (20) coupled to the crankshaft (10a) of the engine (10),
the control unit (70) being configured to control activation of the alternator (20) to stop the piston of the predetermined cylinder (#1) at the bottom dead center of the compression stroke when the automatic stop control is performed.

3. A starting method for a diesel engine (10) that has an automatic stop control to stop fuel injection when a predetermined automatic stop condition is met, **characterized in that** the starting method comprises:
stopping a piston of a predetermined cylinder (#1), among a plurality of cylinders (#1, #2, #3, #4), at a bottom dead center of a compression stroke when the automatic stop control is performed;
starting feeding electricity to a plurality of glow plugs (13) to increase temperature of the plurality of cylinders (#1, #2, #3, #4) of the diesel engine (10), respectively;
thereafter, when the predetermined automatic stop condition is no longer met and the diesel engine (10) is restarted, driving a starter motor (40) to rotate a crankshaft (10a) to cause the piston of the predetermined cylinder (#1) to move upward from the bottom dead center of the compression stroke, causing the fuel injection unit (11) to inject the fuel in the predetermined cylinder in multiple injection stages after actuation of the starter motor (40) is started so as to prepare a lean fuel-air mixture for main combustion in the predetermined cylinder (#1); and
causing the fuel injection unit (11) to inject an amount of fuel for ignition into the predetermined cylinder (#1) immediately before the piston of the predetermined cylinder (#1) reaches a top dead center so as to ignite the lean fuel-air mixture for main combustion.

4. The starting method of claim 3, further comprising controlling activation of an alternator (20) coupled to the crankshaft (10a) of the engine (10) to stop the piston of the predetermined cylinder (#1) at the bottom center of the compression stroke when the automatic stop control is performed.

## Patentansprüche

1. Startvorrichtung für einen Dieselmotor (10), der eine Automatikstoppsteuerung hat, um eine Kraftstoffeinspritzung zu stoppen, wenn eine vorbestimmte Automatikstoppbedingung erfüllt ist, wobei die Startvorrichtung umfasst:
mehrere Kraftstoffeinspritzeinheiten (11), die ausgebildet sind, Kraftstoff direkt in mehrere Zylinder (#1, #2, #3, #4) des Dieselmotors (10) einzuspritzen;
mehrere Glühkerzen (13), die ausgebildet sind, mit Aufnahme von Elektrizität Wärme zu erzeugen, um die Temperatur der Zylinder (#1, #2, #3, #4) des Dieselmotors (10) zu erhöhen;
einen Startermotor (40), die ausgebildet ist, angetrieben zu werden, um eine Kurbelwelle (10a) rotieren zu lassen, wenn der Dieselmotor (10) zu laufen beginnt; und
eine Steuereinheit (70), die ausgebildet ist, die Kraftstoffeinspritzung der Kraftstoffeinspritzeinheiten (11), die Elektrizitätszufuhr an die Glühkerzen (13) und die Aktivierung des Startermotors (40) zu steuern,
**dadurch gekennzeichnet, dass** die Steuereinheit (70) ausgebildet ist, einen vorbestimmten Zylinder (#1) unter den mehreren Zylindern (#1, #2, #3, #4) an einem unteren Totpunkt eines Kompressionshubs zu stoppen und die Elektrizitätszufuhr an die Glühkerzen (13) zu starten, wenn die Automatikstoppkontrolle durchgeführt wird,
und anschließend, wenn die vorbestimmte Automatikstoppbedingung nicht länger erfüllt ist und der Dieselmotor (10) erneut gestartet wird, die Steuereinheit (70) auch ausgebildet ist, den Startermotor (40) anzutreiben, um zu veranlassen, dass sich der Kolben des vorbestimmten Zylinders (#1) aus dem unteren Totpunkt des Kompressionshubs nach oben bewegt, um zu veranlassen, dass die Kraftstoffeinspritzeinheit (11) den Kraftstoff in dem vorbestimmten Zylinder in mehreren Einspritzstufen einspritzt, nachdem die Betätigung des Startermotors (40) gestartet ist, um eine magere Kraftstoff-Luft-Mischung für die Hauptverbrennung in dem vorbestimmten Zylinder (#1) zu erzeugen, und um zu veranlassen, dass die Kraftstoffeinspritzeinheit (11) Kraftstoff für die Zündung einspritzt, unmittelbar bevor der Kolben des vorbestimmten Zylinders (#1) einen oberen Totpunkt erreicht, um die magere Kraftstoff-Luft-Mischung für die Hauptverbrennung zu zünden.

2. Startvorrichtung nach Anspruch 1, ferner umfassend ein Wechselstromgenerator (20), der an die Kurbelwelle (10a) des Motors (10) gekoppelt ist,
wobei die Steuereinheit (70) ausgebildet ist, die Aktivierung des Wechselstromgenerators (20) zu steuern, um den Kolben des vorbestimmten Zylinders (#1) an dem unteren Totpunkt des Kompressionshubs zu stoppen, wenn die Automatikstoppsteuerung durchgeführt wird.

3. Startverfahren für einen Dieselmotor (10), der eine Automatikstoppsteuerung hat, um eine Kraftstoffeinspritzung zu stoppen, wenn eine vorbestimmte Automatikstoppbedingung erfüllt ist, **dadurch gekennzeichnet, dass** das Startverfahren umfasst:
Stoppen eines Kolbens eines vorbestimmten Zylinders (#1) unter mehreren Zylindern (#1, #2, #3, #4) an einem unteren Totpunkt eines Kompressionshubs, wenn die Automatikstoppkontrolle durchgeführt wird,
Starten der Zuführung von Elektrizität an mehrere Glühkerzen (13), um die Temperatur der Zylinder (#1, #2, #3, #4) des Dieselmotors (10) zu erhöhen, anschließend, wenn die vorbestimmte Automatikstoppbedingung nicht länger erfüllt ist und der Dieselmotor (10) erneut gestartet wird, Antreiben eines Startermotors (40), um eine Kurbelwelle (10a) zu drehen, um zu veranlassen, dass sich der Kolben des vorbestimmten Zylinders (#1) aus dem unteren Totpunkt des Kompressionshubs nach oben bewegt, um zu veranlassen, dass die Kraftstoffeinspritzeinheit (11) den Kraftstoff in dem vorbestimmten Zylinder in mehreren Einspritzstufen einspritzt, nachdem die Betätigung des Startermotors (40) gestartet ist, um eine magere Kraftstoff-Luft-Mischung für die Hauptverbrennung in dem vorbestimmten Zylinder (#1) bereitzustellen, und
Veranlassen der Kraftstoffeinspritzeinheit (11), eine Menge an Kraftstoff in den vorbestimmten Zylinder einzuspritzen, unmittelbar bevor der Kolben des vorbestimmten Zylinders (#1) einen oberen Totpunkt erreicht, um die magere Kraftstoff-Luft-Mischung für die Hauptverbrennung zu zünden.

4. Startverfahren nach Anspruch 3, ferner umfassend das Steuern der Aktivierung eines Wechselstromgenerators (20), der an die Kurbelwelle (10a) des Motors (10) gekoppelt ist, um den Kolben des vorbestimmten Zylinders (#1) an dem unteren Totpunkt des Kompressionshubs zu stoppen, wenn die Automatikstoppsteuerung durchgeführt wird.

## Revendications

1. Dispositif de démarrage pour un moteur diesel (10) qui possède une commande d'arrêt automatique permettant d'arrêter l'injection de carburant lorsqu'une condition d'arrêt automatique prédéterminée survient, ledit dispositif de démarrage comprenant :
une pluralité de dispositifs d'injection de carburant (11) configurés pour injecter directement du carburant dans une pluralité de cylindres (#1, #2, #3, #4) du moteur diesel (10), respectivement :
une pluralité de bougies de préchauffage (13) configurées pour générer de la chaleur en recevant de l'électricité afin d'augmenter la température des cylindres (#1, #2, #3, #4) du moteur diesel (10), respectivement ;
un moteur de démarreur (40) configuré pour être entrainé à faire tourner un vilebrequin (10a) lorsque le moteur diesel (10) commence à tourner ; et
un dispositif de commande (70) configuré pour commander l'injection de carburant des dispositifs d'injection de carburant (11), l'alimentation en électricité des bougies de préchauffage (13), et l'actionnement du moteur de démarreur (40),
**caractérisé en ce que** le dispositif de commande (70) est configuré pour arrêter un piston d'un cylindre prédéterminé (#1) parmi la pluralité de cylindres (#1, #2, #3, #4) au niveau d'un point mort bas d'une course de compression et démarrer l'alimentation en électricité des bougies de préchauffage (13) lorsque la commande d'arrêt automatique est exécutée,
et ensuite, lorsque la condition d'arrêt automatique prédéterminée a disparu, et que le moteur diesel (10) a redémarré, le dispositif de commande (70) est également configuré pour entrainer le moteur de démarreur (40) à provoquer la remontée du piston du cylindre prédéterminé (#1) vers le haut, depuis le point mort bas de la course de compression, provoquer l'injection, par le dispositif d'injection de carburant (11), de carburant dans le cylindre prédéterminé dans de multiples phases d'injection après que l'actionnement du moteur du démarreur (40) a démarré de façon à créer un mélange pauvre carburant-air pour la combustion principale dans le cylindre prédéterminé (#1) et provoquer l'injection, par le dispositif d'injection de carburant (11), d'une quantité de carburant pour l'inflammation juste avant que le piston du cylindre prédéterminé (#1) n'atteigne un point mort haut de façon à enflammer le mélange pauvre carburant-air pour la combustion principale.

2. Procédé de démarrage selon la revendication 1, comprenant en outre un alternateur (20) couplé au vilebrequin (10a) du moteur (10),
le dispositif de commande (70) étant configuré pour commander l'actionnement de l'alternateur (20) pour arrêter le piston du cylindre prédéterminé (#1) au niveau du point mort bas de la course de compression lorsque la commande d'arrêt automatique est exécutée.

3. Procédé de démarrage pour un moteur diesel (10) qui dispose d'une commande d'arrêt automatique permettant d'arrêter l'injection de carburant lorsqu'une condition d'arrêt automatique prédéterminée survient, **caractérisé en ce que** ledit procédé de démarrage comprend les étapes suivantes :
arrêter un piston d'un cylindre prédéterminé (#1), parmi une pluralité de cylindres (#1, #2, #3, #4), au niveau d'un point mort bas d'une course de compression lorsque la commande d'arrêt automatique est exécutée ;
démarrer l'alimentation électrique d'une pluralité de bougies de préchauffage (13) afin d'augmenter la température de la pluralité de cylindres (#1, #2, #3, #4) du moteur diesel (10), respectivement ;
ensuite, lorsque la condition d'arrêt automatique prédéterminée a disparu et que le moteur diesel (10) a redémarré, entrainer un moteur de démarreur (40) pour qu'il fasse tourner un vilebrequin (10a) afin de faire monter le piston du cylindre prédéterminé (#1) à partir du point mort bas de la course de compression, en provoquant l'injection de carburant, par le dispositif d'injection de carburant (11), dans le cylindre prédéterminé dans de multiples phases d'injection après que l'actionnement du moteur du démarreur (40) a démarré de façon à préparer un mélange pauvre carburant-air pour la combustion principale dans le cylindre prédéterminé (#1) ; et
provoquer l'injection, par le dispositif d'injection de carburant (11), d'une quantité de carburant pour l'inflammation dans le cylindre prédéterminé (#1) juste avant que le piston du cylindre prédéterminé (#1) n'atteigne un point mort haut de façon à enflammer le mélange pauvre carburant-air pour la combustion principale.

4. Procédé de démarrage selon la revendication 3, comprenant en outre la commande de l'actionnement d'un alternateur (20) couplé au vilebrequin (10a) du moteur (10) afin d'arrêter le piston du cylindre prédéterminé (#1) au niveau du point mort bas de la course de compression lorsque la commande d'arrêt automatique est exécutée.
